# EUROPÄISCHE PATENTANMELDUNG

(11) **EP 0 840 065 A2**
(43) Veröffentlichungstag der Anmeldung: **06.05.1998**
(21) Anmeldenummer: 97113362.4
(22) Anmeldetag: 02.08.1997
(51) Int. Cl.: F24D 10/00, F24D 19/10

(54) **Hausanschlussstation für ein Fernwärmenetz**

(30) Priorität: 02.11.1996 DE 19645160
(71) Anmelder: WILO GmbH, D-44263 Dortmund (DE)
(72) Erfinder: Materne, Thomas, 59348 Lüdinghausen (DE); Stachs, Hartmut, Dr., 39106 Magdeburg (DE)
(74) Vertreter: COHAUSZ HASE DAWIDOWICZ & PARTNER

(57) **Zusammenfassung**

Die Erfindung betrifft eine Hausanschlußstation für ein Fernwärmenetz mit einem alle Teile der Station umgebenden Gehäuse, das Anschlüsse für die Ein- und Auslässe der Fernwärme, des Heizkreislaufes und des Sanitärwasserkreislaufes besitzt, wobei an einer Außenwand des Gehäuses eine die Station steuernde elektronische Regeleinrichtung mit einem eigenen Gehäuse lösbar anschließbar ist, wobei für die elektrischen Verbindungen beide Gehäuse an der jeweiligen Außenseite eine Kontaktstelle aufweisen.

## Beschreibung

Die Erfindung betrifft eine Hausanschlußstation für ein Fernwärmenetz mit einem alle Teile der Station umgebenden Gehäuse, das Anschlüsse für die Ein- und Auslässe der Fernwärme, des Heizkreislaufes und des Sanitärwasserkreislaufes besitzt.

Es ist bekannt, innerhalb einer Hausanschlußstation eine Regeleinrichtung, insbesondere zum Steuern der Pumpen, anzuordnen. Hierdurch ist es bei der Herstellung und Montage als auch bei späteren Änderungen und Reparaturen erforderlich, in die Hausanschlußstation einzugreifen. Insbesondere sind damit, je nach Regelungs-, Steuerungs-, Meß- oder Überwachungsaufgabe unterschiedliche Geräte herzustellen und anzubieten.

Aufgabe der Erfidnung ist es, eine Hausanschlußstation der eingangs genannten Art so zu verbessern, daß bei einfachster Herstellung und Montage und Wartung die unterschiedlichsten Regel-, Steuer-, Überwachungs- und/oder Meßaufgaben übernommen werden können, ohne die Hausanschlußstation selber verändern zu müssen.

Diese Aufgabe wird erfindungsgemäß dadurch gelöst, daß an einer Außenwand des Gehäuses eine die Station steuernde elektronische Regeleinrichtung mit einem eigenen Gehäuse lösbar anschließbar ist, wobei für die elektrischen Verbindungen beide Gehäuse an der jeweiligen Außenseite eine Kontaktstelle aufweisen.

Hierdurch sind Hausanschlußstation und Regeleinrichtung zwei kompakte, getrennte Einheiten, die leicht montierbar und austauschbar sind. Die anschließbare Regeleinrichtung kann die unterschiedlichsten Regel-, Steuer-, Überwachungs- und/ oder Meßaufgaben übernehmen und braucht allein nur ausgewechselt zu werden, ohne die Hausanschlußstation selber verändern zu müssen. Hierbei ist ein getrennter, durch längere Leitungen verbundener Anschlußkasten nicht erforderlich. Ein Eingriff in die Hausanschlußstation ist nicht erforderlich, sondern diese kann stets die gleiche bleiben, so daß Herstellung, Lagerhaltung und Montage sowie Reparaturen besonders einfach sind. Es können sowohl handelsübliche Regelungen als auch spezielle Regelungen angeschlossen werden.

Besonders vorteilhaft ist es, wenn die Regeleinrichtung an ihrer Außenseite ein Display aufweist. Auch ist von größtem Vorteil, wenn die Regeleinrichtung an dem Gehäuse der Station insbesondere seitlich ansteckbar ist.

Vorzugsweise wird vorgeschlagen, daß die elektrische Kontaktstelle zwischen der Station und der Regeleinrichtung eine Steckleisteaufweist. Auch sollten die zwei Gehäuseaußenflächen, mit denen die zwei Gehäuse aneinanderliegen, die gleiche Höhe und Breite aufweisen.

Von besonderem Vorteil ist es, wenn die Regeleinrichtung ein Eingabefeld zur Veränderung und/oder Abfrage von Parametern aufweist. Auch wird vorgeschlagen, daß die Regeleinrichtung eine Einrichtung zur Wärmemengenzählung aufweist.

Von größtem Vorteil ist es, wenn durch das Display anzeigbar sind: Wärmemengenzählung, Volumenstrom, Systemdrücke, Temperaturen, der aktuell betriebene Kreis, Störungsmeldungen, Abfrage aller Informationen der integrierten Bauteile, Betriebszeit und/oder Uhrzeit/Datum

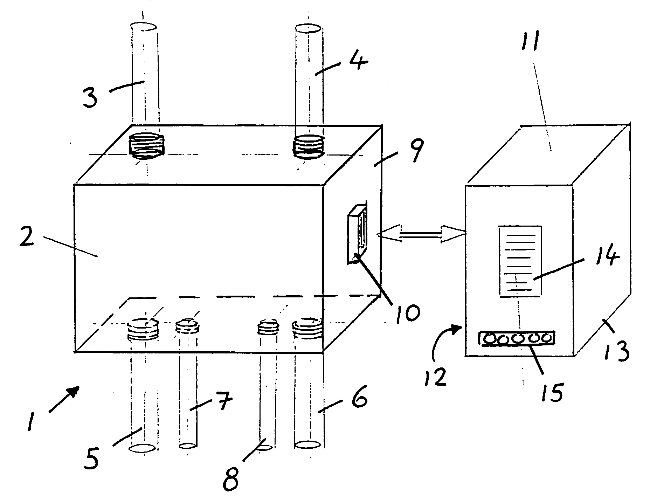

Ein Ausführungsbeispiel der Erfindung ist in der Zeichnung isometrisch dargestellt und wird im folgenden näher beschrieben:

Die Hausanschlußstation 1 weist ein quaderförmiges Gehäuse 2 auf, das die darin befindlichen Teile insbesondere allseitig umgibt. Innerhalb des Gehäuses 2 befindet sich mindestens eine regelbare/steuerbare Pumpe, eine Drei-Wege-Ventil-Einheit, ein Wärmetauscher, Sensoren für Temperaturen, Volumenstrom und Druck, eine Befüll-/Entleerungseinrichtung, ein Ausdehnungsgefäß oder ein Anschluß für ein Ausdehnungsgefäß, mindestens ein Anschluß für Sicherheitsarmaturen und ggf. weitere Einrichtungen und Geräte.

An der Oberseite des Gehäuses 2 sind der Fernwärmevorlauf 3 und der Fernwärmerücklauf 4 angeordnet. An der Unterseite des Gehäuses 2 befinden sich der Heizkreisvorlauf 5, der Heizkreisrücklauf 6, der Sanitärkreisvorlauf 7 und der Sanitärkreisrücklauf 8.

An einer seitlichen, senkrechten Außenwand 9 ist eine Kontaktstelle 10 als elektrische Schnittstelle in Form einer Steckleiste zur Regelung der Hausanschlußstation insbesondere der Pumpen und ggf. der Ventile angeordnet. An dieser Außenwand 9 ist eine Regeleinrichtung 11 lösbar befestigbar, die auf ihrer senkrechten seitlichen Außenwand 12 eine Kontaktstelle besitzt, die mit der Kontaktstelle 10 des Gehäuses 2 übereinstimmt, so daß die Regeleinrichtung 11 an das Gehaäuse 2 ansetzbar ist, wobei die Kontakte dann aneinanderliegen. Hierbei weist im Ausführungsbeispiel die Außenwand 9 dieselben Abmessungen auf, wie die Außenwand 12, so daß nach dem Ansetezn der Regeleinrichtung 11 am Gehäuse 2 diee beiden Gehäuse optisch eine kompakte Einheit bilden.

Im quaderförmigen Gehäuse 13 der Regeleinrichtung 11 befinden sich elektronische Steuer- bzw. Regeleinrichtungen für: Wärmemengenzählung, Volumenstrom, Systemdrücke, Temperaturen, aktuell betriebener Kreis, Störungsmeldungen, Abfrage aller Informationen der integrierten Bauteile, Betriebszeit und/oder Uhrzeit/Datum. Auch erfolgt vorzugsweise die Stromzufuhr zu den Geräten in der Hausanschlußstation über die Regeleinrichtung 11.

Das Gehäuse 13 besitzt an der Vorderseite ein Display 14 und ein Eingabefeld 15 zur manuellen Eingabe. Das Display kann zur Anzeige von Temperaturen, Volumenströmen, Systemdrücken, der Wärmemenge und weiteren Werten dienen.

## Patentansprüche

1. Hausanschlußstation (1) für ein Fernwärmenetz mit einem alle Teile der Station umgebenden Gehäuse (2), das Anschlüsse (3-8) für die Ein- und Auslässe der Fernwärme, des Heizkreislaufes und des Sanitärwasserkreislaufes besitzt, **dadurch gekennzeichnet,** daß an einer Außenwand (9) des Gehäuses (2) eine die Station steuernde elektronische Regeleinrichtung (11) mit einem eigenen Gehäuse (13) lösbar anschließbar ist, wobei für die elektrischen Verbindungen beide Gehäuse an der jeweiligen Außenseite (9, 12) eine Kontaktstelle (10) aufweisen.

2. Hausanschlußstation nach Anspruch 1, **dadurch gekennzeichnet,** daß die Regeleinrichtung (11) an ihrer Außenseite ein Display (14) aufweist.

3. Hausanschlußstation nach Anspruch 1 oder 2, **dadurch gekennzeichnet,** daß die Regeleinrichtung (11) an dem Gehäuse (2) der Station (1) insbesondere seitlich ansteckbar ist.

4. Hausanschlußstation nach einem der vorhergehenden Ansprüche, **dadurch gekennzeichnet,** daß die elektrische Kontaktstelle (10) zwischen der Station (1) und der Regeleinrichtung (11) eine Steckleiste aufweist.

5. Hausanschlußstation nach einem der vorhergehenden Ansprüche, **dadurch gekennzeichnet,** daß die zwei Gehäuseaußenflächen (9, 12), mit denen die zwei Gehäuse (2, 13) aneinanderliegen, die gleiche Höhe und Breite aufweisen.

6. Hausanschlußstation nach einem der vorhergehenden Ansprüche, **dadurch gekennzeichnet,** daß die Regeleinrichtung (11) ein Eingabefeld (15) zur Veränderung und/oder Abfrage von Parametern aufweist.

7. Hausanschlußstation nach einem der vorhergehenden Ansprüche, **dadurch gekennzeichnet,** daß die Regeleinrichtung (11) eine Einrichtung zur Wärmemengenzählung aufweist.

8. Hausanschlußstation nach einem der Ansprüche 2 bis 7, **dadurch gekennzeichnet,** daß durch das Display (14) anzeigbar sind: Wärmemengenzählung, Volumenstrom, Systemdrücke Temperaturen, der aktuell betriebene Kreis, Störungsmeldungen, Abfrage aller Informationen der integrierten Bauteile, Betriebszeit und/oder Uhrzeit/Datum.
